# EUROPÄISCHE PATENTANMELDUNG

(11) **EP 2 515 020 A1**
(43) Veröffentlichungstag der Anmeldung: **24.10.2012**
(21) Anmeldenummer: 12160942.4
(22) Anmeldetag: 23.03.2012
(51) Int. Cl.: F16L 33/22, F16L 33/207, B01D 46/00

(54) **Ansatzstutzen für Filterschläuche**

(30) Priorität: 21.04.2011 DE 102011018621
(71) Anmelder: Mann + Hummel GmbH, 71638 Ludwigsburg (DE)
(72) Erfinder: Maier, Michael, 94419 Reisbach (DE); Walz, Stefan, 71691 Freiberg (DE); Wagner, Fabian, 71696 Möglingen (DE); Kreiner, Anton, 94419 Reisbach (DE)

(57) **Zusammenfassung**

Ein Ansatzstutzen (1) für Filterschläuche (30)umfasst einen Innenteil (10), welches eine innere Durchgangsöffnung (11) zum Durchführen des Filterschlauches (30) und eine äußere, um seinen Umfang verlaufende Anlagefläche (12) zum dichten Anliegen eines über ein erstes Ende (13) des Innenteils (10) nach außen umgeschlagenen Abschnitts (32) des Filterschlauches (30) aufweist, und einen Außenteil (20), das eine Hülse aufweist, und das derart auf das Innenteil (10) aufsteckbar ist, dass der umgeschlagene Abschnitt (32) des Filterschlauches (30) zwischen der Hülse und der Anlagefläche (12) eingeklemmt wird.

## Beschreibung

### Technisches Gebiet

Die vorliegende Erfindung bezieht sich auf einen Ansatzstutzen für Filterschläuche, insbesondere vollflexible Luftfilterschläuche.

### Stand der Technik

Filterschläuche, insbesondere vollflexible Luftfilterschläuche, werden verwendet, um durch das Filtermedium des Filterschlauches eine Rohluftseite von einer Reinluftseite zu trennen. Im Gebrauch wird Luft von der Rohluftseite durch das Filtermedium auf die Reinluftseite gefördert, wobei sich Verunreinigungen der Luft auf der Rohluftseite am Filtermedium rohluftseitig am Luftfilterschlauch ablagern. Die Filterwirkung wird dabei durch das Material des Luftfilterschlauches, insbesondere dessen Porengröße, bestimmt. Filterschläuche sind mit verschiedenen Querschnitten bekannt. Neben runden Querschnitten sind auch faltenbalgförmige Filterschläuche, insbesondere mit rechteckigem Querschnitt, bekannt.

Zum Befestigen der Filterschläuche an Gehäusen kommen im Stand der Technik Ansatzstutzen zum Einsatz. Auf diese Ansatzstutzen werden die Filterschläuche in der Regel aufgeschoben. Federringe oder dergleichen werden anschließend auf den Filterschlauch geschoben, um den Filterschlauch am Ansatzstutzen zu befestigen. Für ein Abdichten des Filterschlauches am Ansatzstutzen werden verbreitet Dichtungen zwischen dem Ansatzstutzen und dem Filterschlauch vorgesehen.

Die Ansatzstutzen des Standes der Technik haben den Nachteil, dass Dichtungen zum Abdichten des Filterschlauchs am Ansatzstutzen zwischen Ansaugstutzen und Filterschlauch vorgesehen werden, was zusätzliche Kosten bedingt. Ferner bietet das einfache Aufschieben des Filterschlauches auf den Ansaugstutzen eine unzureichende Festigkeit der Verbindung von Filterschlauch und Ansaugstutzen, mit dem Risiko, dass sich der Filterschlauch vom Ansaugstutzen unter Belastung lösen kann.

### Offenbarung der Erfindung

Es ist daher Aufgabe der vorliegenden Erfindung, einen Ansatzstutzen für Filterschläuche zur Verfügung zu stellen, der eine stabile und dichte Verbindung von Filterschlauch und Ansatzstutzen bietet und kostengünstig herstellbar ist.

Diese Aufgabe wird durch einen Ansatzstutzen mit den Merkmalen des Patentanspruchs 1 und eine Filterschlauchanbindung mit den Merkmalen des Patentanspruchs 10 gelöst. In den Unteransprüchen finden sich vorteilhafte Ausgestaltungen und Verbesserungen.

Demgemäß umfasst ein Ansatzstutzen für Filterschläuche ein Innenteil und ein Außenteil, wobei das Innenteil und das Außenteil jeweils eine um seinen Umfang verlaufende Anlagefläche zum Anliegen eines Abschnitts des Filterschlauchs aufweist. Das Außenteil hat ferner eine Hülse, welche derart auf das Innenteil aufsteckbar ist, dass der Abschnitt des Filterschlauchs zwischen den Anlageflächen eingeklemmt ist.

Bei einer Ausführungsform umfasst das Innenteil eine innere Durchgangsöffnung zum Durchführen des Filterschlauches. Insbesondere weist der Filterschlauch ein offenes und ein geschlossenes Ende auf, wobei das offene Ende am Ansatzstutzen befestigt ist und sich der Filterschlauch zu seinem geschlossenen Ende hin durch die Durchgangsöffnung des Innenteils geführt ist bzw. verläuft. Vorzugsweise umfasst das Innenteil zusätzlich eine äußere, um seinen Umfang verlaufende Anlagefläche zum Anliegen eines über ein erstes Ende des Innenteils nach außen umgeschlagenen Abschnitts des Filterschlauches.

Durch das Umschlagen des Filterschlauches über das erste Ende des Innenteils kann eine besonders zugfeste und dichte Verbindung zwischen Filterschlauch und Ansatzstutzen ohne das Vorsehen einer zusätzlichen Dichtung erreicht werden. Der Ansatzstutzen weist ferner ein Außenteil auf, das eine Hülse aufweist, und das so auf das Innenteil aufsteckbar ist, dass der umgeschlagene Abschnitt des Filterschlauches zwischen der Hülse und der Anlagefläche eingeklemmt wird.

Die Umschlagung bietet dabei einen großen Widerstand gegen ein Herausziehen des Filterschlauchs aus dem Ansatzstutzen, da sie beim Herausziehen des Filterschlauchs aus dem Ansatzstutzen stark verformt werden muss. Gleichzeitig bilden die beiden Lagen Filterschlauch mit dem Innenteil dazwischen eine Art Labyrinthdichtung mit besonders hoher Dichtigkeit. Mittels des Außenteils wird die Stabilität der Verbindung zwischen Filterschlauch und Ansatzstutzen weiter verbessert und die Dichtigkeit erhöht. Die Hülse drückt dabei den umgeschlagenen Abschnitt des Filterschlauches so gegen die Anlagefläche des Innenteils, das eine dichte Verbindung zwischen Anlagefläche und Filterschlauch gebildet wird.

Gemäß einer bevorzugten Ausführungsform weist das Außenteil eine über einen Übergangsabschnitt mit der Hülse verbundene Innenhülse auf, die innerhalb der Hülse angeordnet, von der Hülse radial beabstandet ist und die wenigstens teilweise im Bereich der Anlagefläche innerhalb des Innenteils verläuft. Dadurch kann der innerhalb des Innenteils verlaufende Filterschlauch radial gegen das Innenteil gedrückt werden, was eine zusätzliche Abdichtung des Filterschlauches mit dem Innenteil bewirkt, da eine zusätzliche unter Anpressdruck stehende dichtende Anlagefläche gebildet wird. Ferner wird die Zugbelastung der Verbindung von Filterschlauch und Ansatzstutzen erhöht, da die Umschlagung stabilisiert wird, indem der Filterschlauch beidseitig an das Innenteil angepresst wird.

Bevorzugt sind das Innenteil und bevorzugt auch das Außenteil als zweiteiliges radial gefügtes Kunststoffspritzgussteil ausgeführt. Dadurch können die Teile kostengünstig mittels einer teilbaren Spritzgussform hergestellt werden. Beispielsweise werden als Material thermoplastische oder duroplastische Kunststoffe, insbesondere Polyethylen, Polyamid oder Polypropylen verwendet.

Bevorzugt ist die Anlagefläche wenigstens bereichsweise als geriffelte Oberfläche gestaltet. Dadurch wird die Kraftübertragung gegen ein Abgleiten des Filterschlauches von der Anlagefläche verbessert. Ferner kann beispielsweise eine wellige geriffelte Oberfläche die Dichtigkeit zwischen Filterschlauch und Anlagefläche erhöhen.

Die Anlagefläche kann wenigstens bereichsweise als Sägezahnprofil gestaltet werden, dessen erste flachere Zahnflanken in Richtung auf das erste Ende orientiert sind und dessen zweite steilere Flanken davon weg orientiert sind. Das Sägezahnprofil bildet somit eine Art Widerhakenfläche, die ein Abgleiten des aufgeschobenen Filterschlauchs von der Anlagefläche vermeidet. Gleichzeitig ermöglichen die flachen Flanken ein leichtes Aufschieben des Filterschlauchs auf die sägezahnprofilierte Anlagefläche. Denkbar ist auch die Ausführung der Auflagefläche als Wellenprofil.

Bevorzugt ist zusätzlich eine Rastverbindung zwischen dem Innenteil und dem Außenteil zum Verrasten des auf das Innenteil aufgeschobenen Außenteils vorgesehen. Zum Beispiel ist dazu am Innenteil wenigstens ein Widerhaken angeordnet, der in eine Ausnehmung im Außenteil federnd einrastet. Dadurch kann das Außenteil am Innenteil in der aufgeschobenen Stellung verrastet werden, wodurch die Verbindung zwischen Ansatzstutzen und Filterschlauch fixiert wird.

Alternativ ist die Verbindung zwischen dem Innenteil und dem Außenteil lösbar vorgesehen. Es kann dabei insbesondere eine lösbare Rastverbindung, eine Schnappverbindung, eine Steckverbindung oder dergleichen zum Einsatz kommen.

Vorzugsweise ist der Übergangsabschnitt, mit dem am Außenteil die Innenhülse mit der Hülse verbunden ist, elastisch ausgebildet. Dadurch können Innenhülse und Hülse elastisch gegeneinander auffedern, wodurch ihr Abstand vergrößert wird. Dies ermöglicht ein elastisches Einklemmen des Filterschlauchs. Filterschläuche mit einer unterschiedlichen Materialstärke können dadurch mit einem unveränderten Ansatzstutzen gehalten werden.

Bevorzugt ist am Innenteil an einem zweiten Ende ein Kupplungselement, insbesondere ein Bajonettanschluss oder ein Rastelement vorgesehen. Damit kann der Ansatzstutzen lösbar an einem Gehäuse angebracht werden.

Vorzugsweise ist das Innenteil oder das Außenteil mit einer umlaufenden Dichtung zum dichtenden Anschluss an eine Fluidleitung ausgestattet ist.

Es kann z. B. eine Dichtungsaufnahme in der Art einer um den Umfang umlaufenden Ausnehmung für einen Dichtring vorgesehen sein. Die Dichtung kann ferner in das Innenteil oder das Außenteil integriert sein.

Eine Filterschlauchanbindung weist einen Ansatzstutzen auf. Ein Filterschlauch verläuft durch die innere Durchgangsöffnung des Innenteils und ist über ein erstes Ende des Innenteils nach außen umgeschlagen. Dieser umgeschlagene Abschnitt des Filterschlauches liegt dicht an der äußeren um den Umfang des Innenteils verlaufenden Anlagefläche an. Das Außenteil mit der Hülse ist so auf das Innenteil aufgesteckt, dass der umgeschlagene Abschnitt des Filterschlauches zwischen der Hülse und der Anlagefläche eingeklemmt ist.

Der Filterschlauch kann dabei an der Anlagefläche angeklebt sein. Es ist auch möglich, dass das Innenteil mit dem Außenteil verklebt oder verschweißt ist.

In einer Weiterbildung umfasst der Ansaugstutzen oder die Filterschlauchanbindung ein Kupplungselement, beispielsweise in der Art eines Bajonetts, zum Ankoppeln des Ansaugstutzens an ein Bauteil, wie z. B. ein Fluidzufuhrrohr. Als Fluid kommt Verbrennungsluft für einen Verbrennungsmotor oder aber auch Außenluft für einen Innenraumfilter in Frage.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine schematische perspektivische Darstellung eines Ansatzstutzens gemäß einer ersten Ausführungsform;
Fig. 2 eine schematische Schnittdarstellung einer Filterschlauchanbindung mit einem Ansatzstutzen gemäß der ersten Ausführungsform;
Fig. 3 eine schematische Schnittdarstellung einer Filterschlauchanbindung mit einem Ansatzstutzen gemäß einer zweiten Ausführungsform;
Fig. 4 eine schematische Schnittdarstellung einer Filterschlauchanbindung mit einem Ansatzstutzen gemäß einer dritten Ausführungsform;
Fig. 5 eine schematische perspektivische Darstellung einer Filterschlauchanbindung mit einem Ansatzstutzen gemäß einer vierten Ausführungsform; und
Fig. 6 eine schematische Schnittdarstellung einer Filterschlauchanbindung mit einem Ansatzstutzen gemäß der vierten Ausführungsform.

In den Figuren bezeichnen dieselben Bezugszeichen gleiche oder funktionsgleiche Komponenten, soweit nichts Gegenteiliges angegeben ist.

### Ausführungsform(en) der Erfindung

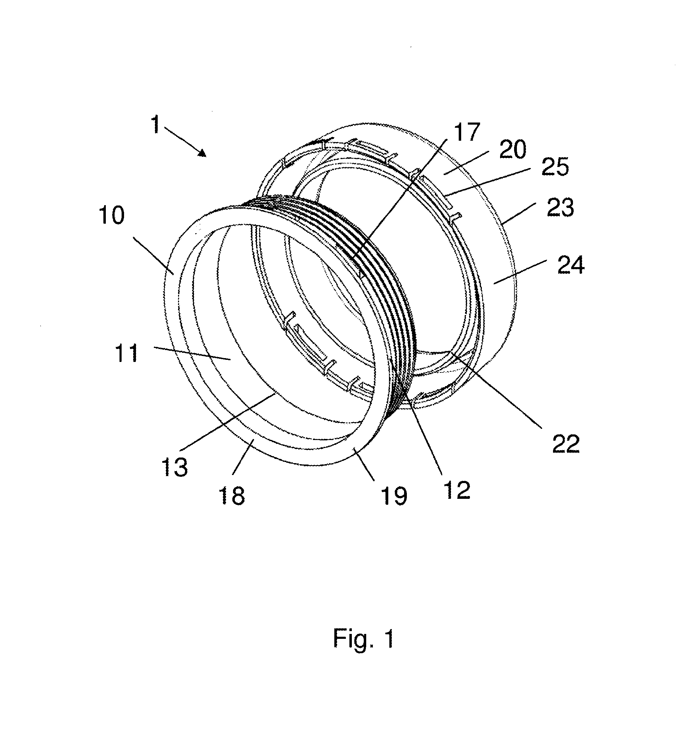

Fig. 1 zeigt eine schematische perspektivische Darstellung einen Ansatzstutzen 1 gemäß einer ersten Ausführungsform. Der Ansatzstutzen 1 umfasst einen links im Bild dargestelltes Innenteil 10 und ein rechts im Bild dargestelltes Außenteil 20. Das Außenteil 20 weist eine Hülse 24 auf, die über einen Übergangsabschnitt 23 in eine Innenhülse 22 übergeht. Werden das Innenteil 10 und das Außenteil 20 axial ineinander gesteckt, verläuft das Innenteil 10 teilweise mit seinem ersten Ende 13 zwischen der Hülse 24 und der Innenhülse 22.

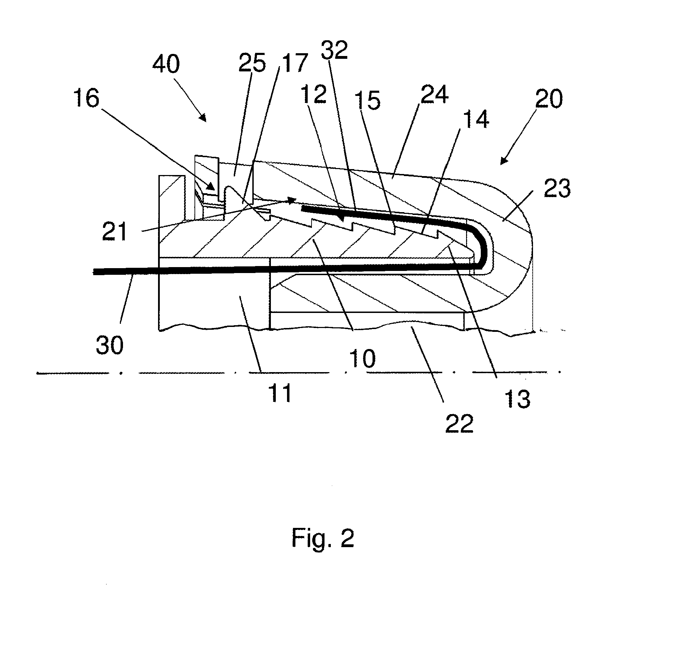

Das Innenteil 10 weist eine Durchgangsöffnung 11 auf, die vorgesehen ist, einen Filterschlauch 30 (Filterschlauch 30 ist nur in Fig. 2 dargestellt) aufzunehmen. Der Filterschlauch 30 wird durch die Durchgangsöffnung 11 gesteckt und dann über das erste Ende 13 des Innenteils 10 umgeschlagen. Der dabei gebildete umgeschlagene Abschnitt 32 des Filterschlauchs 30 liegt dann auf einer Anlagefläche 12 des Innenteils 10 auf. Werden das Innenteil 10 und das Außenteil 20 des Ansatzstutzens 1 ineinander gefügt, wird der umgeschlagene Abschnitt 32 des Filterschlauches 30 durch die Hülse 24 des Außenteils 20 an die Anlagefläche 12 angepresst.

Der Übergangsabschnitt 23, der die Hülse 24 mit der Innenhülse 22 verbindet, ist bei diesem Ausführungsbeispiel elastisch ausgebildet, um ein Auffedern der Innenhülse 22 relativ zur Hülse 24 zu ermöglichen und den Filterschlauch dadurch elastisch zu halten. Bei diesem Ausführungsbeispiel des Ansatzstutzens 1 ist eine Rastverbindung 16 (vgl. Figur 2) zwischen dem Innenteil 10 und dem Außenteil 20 realisiert, die ein Verrasten des Innenteils 10 mit dem Außenteil 20 in der zusammen geschobenen Stellung ermöglicht. Die Rastverbindung 16 besteht aus Widerhaken 17 am Innenteil, die in Ausnehmungen 25 am Außenteil 20 eingreifend verrasten. Dadurch werden das Innenteil 10 und das Außenteil 20 zusammengehalten, wenn sie miteinander verrastet sind. Ferner sind am Innenteil 10 an einem zweiten Ende 18 Kupplungselemente 19 als Bajonettelemente vorgesehen, die eine lösbare Befestigung des Ansatzstutzens 1 an einem Gehäuse ermöglichen. Der Ansatzstutzen 1 ermöglicht die zugfeste und dichte Aufnahme eines Filterschlauches 30, ohne dass eine zusätzliche Dichtung vorgesehen werden braucht. Die Abdichtung erfolgt hierbei durch den Filterschlauch 30 selbst, indem dieser zwischen das Innenteil 10 und Außenteil 20 des Ansatzstutzens eingeklemmt wird.

Fig. 2 zeigt eine schematische Schnittdarstellung einer Filterschlauchanbindung 40 mit einem Ansatzstutzen 1 gemäß der ersten Ausführungsform. Es ist hierbei lediglich eine, nämlich die obere, Hälfte des geschnittenen Ansatzstutzens 1 dargestellt. Der Ansatzstutzen 1 aus Innenteil 10 und Außenteil 20 ist im zusammen gefügten Zustand dargestellt.

Die Anlagefläche 12 verläuft dabei zwischen der Hülse 24 und der Innenhülse 22 des Außenteils 20. In dieser zusammen geschobenen Stellung greifen die Widerhaken 17 am Innenteil 10 in die Ausnehmungen 25 am Außenteil, so dass Innenteil 10 und Außenteil 20 miteinander verrastet sind und sich nicht voneinander lösen. Denkbar ist auch eine Ausführung mit einer lösbaren Rastverbindung 16, beispielsweise um den Filterschlauch 30 austauschen zu können. Ein Filterschlauch 30 ist durch die Durchgangsöffnung 11 im Innenteil 10 durchgeführt und über das erste Ende 13 des Innenteils 10 umgeschlagen, wodurch ein umgeschlagener Abschnitt 32 gebildet ist, der an der Anlagefläche 12 des Innenteils 10 anliegt. Die Anlagefläche 12 weist erste flachere Zahnflanken 14 auf, die ein leichtes Aufschieben des Filterschlauches 30 über die Anlagefläche 12 erlauben. Zweite steilere Zahnflanken 15 an der Anlagefläche 12 stellen eine Art Widerhaken dar, die ein Abrutschen des Filterschlauches 30 von der Anlagefläche 12 verhindern sollen. Dadurch kann der Filterschlauch 30 leicht aufgeschoben werden und ist trotzdem gut gegen ein Abrutschen von der Anlagefläche 12 gesichert.

Die Innenhülse 22 und die Hülse 24 des Außenteils 20 sind über einen elastischen Übergangsabschnitt 23 miteinander verbunden, wodurch sie elastisch gegeneinander auffedern und der Filterschlauch 30 zwischen Anlagefläche 12 und Hülse 24 als auch zwischen Innenhülse und Innenteil 10 eingeklemmt wird. Dadurch wird eine hohe Dichtigkeit der Filterschlauchanbindung 40 erreicht, ohne dass zusätzliche Dichtungen verwendet werden. Das Dichtmedium wird dabei durch den Filterschlauch 30 selbst gebildet. Die Abdichtung erfolgt dabei filtrationsdicht und nicht notwendig fluiddicht. Das heißt, dass verschmutzte Luft beim potenziellen Durchtreten durch den Zwischenraum zwischen der Hülse 24 und dem Innenteil 10 das Filtermedium 30 durchströmen muss. Dadurch wird selbst bei einer nicht luftdichten Kopplung des Innenteils 10 mit dem Außenteil 20 verhindert, dass verunreinigte Luft zwischen den beiden Teilen 10, 20 in einen Reinluftbereich gelangen kann.

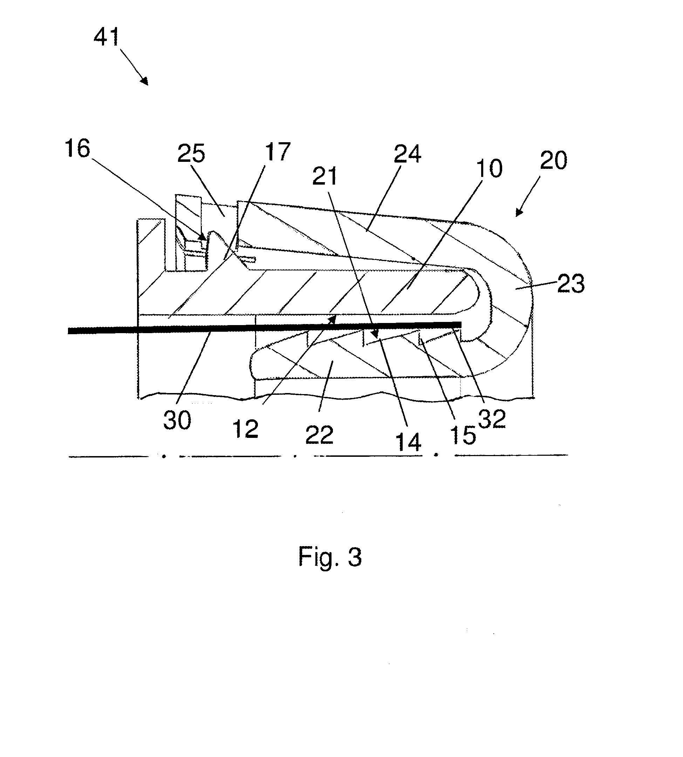

Fig. 3 zeigt eine schematische Schnittdarstellung einer Filterschlauchanbindung 41 mit einem Ansatzstutzen 1 gemäß einer zweiten Ausführungsform. Dabei ist der Abschnitt 32 des Filterschlauches 30 nicht umgeschlagen, sondern zwischen den Anlageflächen 12 und 21 des Innenteils 10 und des Außenteils 20 eingeklemmt. Im Vergleich zu dem ersten Ausführungsbeispiel der Figuren 1 und 2 sind an der Innenhülse 22 des Außenteils 20 erste flachere Zahnflanken 14, die ein leichtes Aufschieben des Filterschlauches 30 über die Anlagefläche 21 erlauben, und zweite steilere Zahnflanken 15 vorgesehen. Dadurch wird ein Abrutschen des Filterschlauches 30 von den Anlageflächen 12, 21 verhindert.

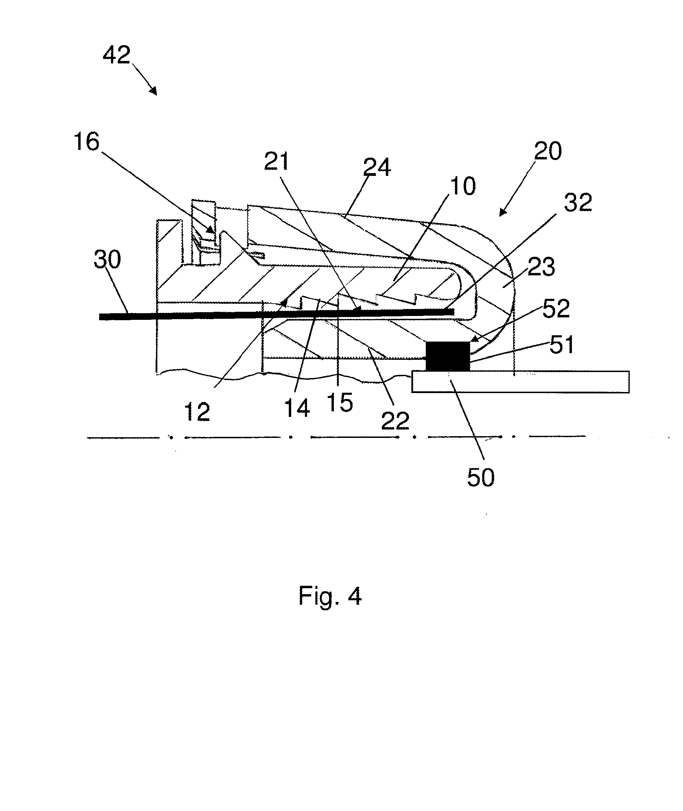

Fig. 4 zeigt eine schematische Schnittdarstellung einer Filterschlauchanbindung 42 mit einem Ansatzstutzen 1 gemäß einer dritten Ausführungsform. Im Vergleich zu dem zweiten Ausführungsbeispiel der Figur 3 sind an der Innenseite des Innenteils 10 flache Zahnflanken 14 und steile Zahnflanken 15 angeordnet. Der Endabschnitt 32 des Filterschlauches 30 liegt somit zwischen der glatten Anlagefläche 21 des Außenteils 20, welche an der Innenhülse 22 vorliegt, und der geriffelten, bzw. mit Zähnen 14, 15 versehenen Auflagefläche 12 des Innenteils 10.

Figur 4 zeigt ferner eine Dichtungsaufnahme 52 für eine umlaufende Dichtung 51. Die Dichtung 51 ist z. B. als Dichtungsring um den inneren Umfang der Innenhülse 22 derart abgeordnet, dass beim Anstecken der Filterschlauchanbindung 42 an ein Zuluftrohr 51 eine dichter Abschluss entsteht. Man erkennt ein externes Bauteil, wie z. B. ein Anschlussrohr 50 in der Figur 4 rechts. Das Bauteil 50 kann auch Teil eines Filtergehäuses sein, wobei die Dichtung 51 einen Abschluss zwischen einer Rohluft- und einer Reinluftseite schafft.

Die Dichtung 51 wird insbesondere während der Herstellung des Ansatzstutzens an der Hülse 24, 23, 22 oder dem Innenteil 10 angebracht.

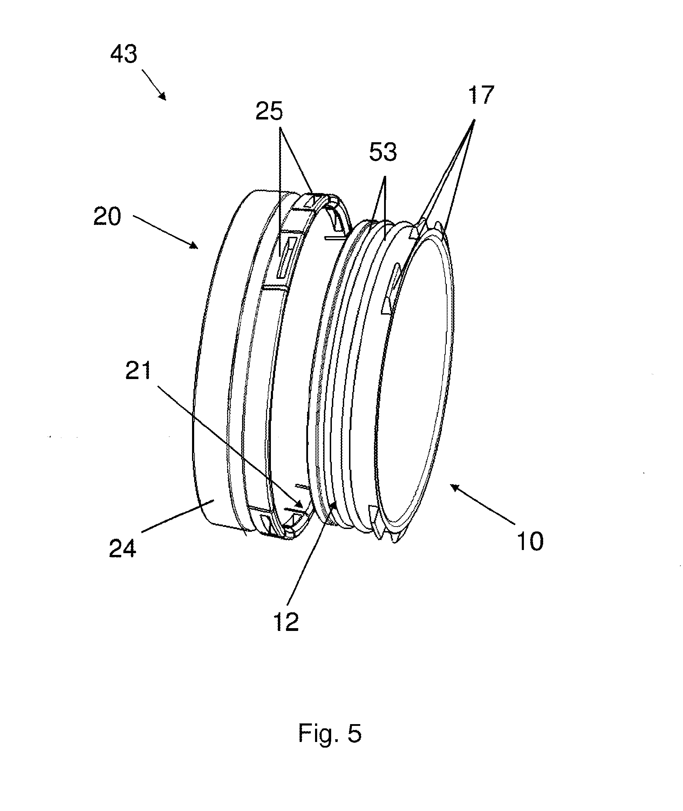

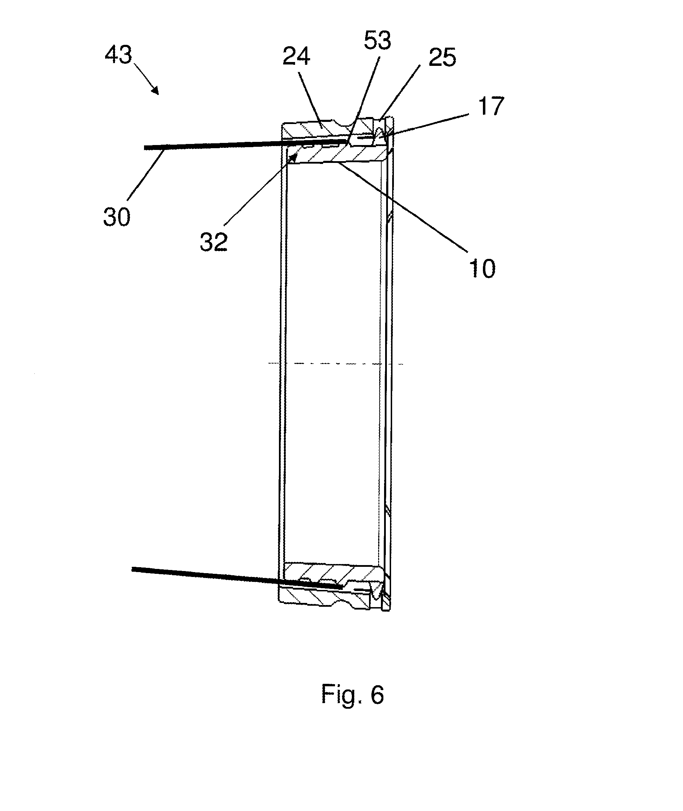

Figur 5 zeigt ein weiteres Ausführungsbeispiel für eine Filterschlauchanbindung perspektivisch. Die Figur 6 ist eine Schnittdarstellung des Ausführungsbeispiels. Der Ansatzstutzen 43 umfasst ein Innenteil 10 und ein Außenteil 20, welche jeweils in der Art einer Hülse gestaltet sind. Die beiden Teile 10, 20 lassen sich ineinander stecken, sodass zwischen einer (äußeren) Auflagefläche 12 des Innenteils 10 und einer (inneren) Auflagefläche 21 des Außenteils 20 ein Endabschnitt 32 eines schlauchförmigen Filtermediums 30 eingeklemmt werden kann.

Damit die beiden hülsenförmigen teile 10, 20 mit dem dazwischen liegenden Filtermedium 32 fixiert sind, ist das Innenteil außenseitig mit einer Rastnase 17 ausgestattet. Rastnase 17 greift im zusammengesteckten Zustand in einen Schlitz 25 der Hülse 24 des Außenteils 20. Man erkennt in der perspektivischen Darstellung der Figur 5, dass mehrere Schlitze 25 auf einer Umfangslinie des Außenteils angeordnet sind. Die Schlitze 25 sind derart auf der Umfangslinie einander gegenüber angeordnet, dass das Außenteil 20 in einem einteilige Spritzgusswerkzeug ohne Hinterschneidungen hergestellt werden kann. Ähnlich sind entsprechende Rastnasen 17 auf einer äußeren Umfangslinie des Innenteils 10 vorgesehen.

Damit der Endabschnitt 32 des Filtermediums 30 in einem festen Klemmschluss zwischen den Auflageflächen 12, 21 hält, ist der Innenteil 10 mit mehreren den äußeren Umfang umlaufenden Rippen 53 ausgestattet. Prinzipiell könne entsprechende Rippen auch an dem Außenteil 20 nach innen ragend angeordnet werden. Somit wird der Filterendabschnitt 21 radial sicher gehalten, und die beiden Teile 10, 20 sind fest miteinander verklipst bzw. verrastet.

Obwohl die vorliegende Erfindung anhand bevorzugter Ausführungsbeispiele vorliegend beschrieben wurde, ist sie darauf nicht beschränkt, sondern auf vielfältige Weise modifizierbar. Beispielsweise können der Ansatzstutzen und die Filterschlauchanbindung auch ohne die über den Übergangsabschnitt mit der Hülse verbundene Innenhülse ausgeführt sein.

## Patentansprüche

1. Ansatzstutzen (1) für einen Filterschlauch (30) mit einem Innenteil (10) und einem Außenteil (20), wobei das Innenteil (10) und das Außenteil (20) jeweils eine um seinen Umfang verlaufende Anlagefläche (12, 21) zum Anliegen eines Abschnitts (32) des Filterschlauches (30) aufweist, und das Außenteil (20) eine Hülse (24) aufweist, welche derart auf das Innenteil (10) aufsteckbar ist, dass der Abschnitt (32) des Filterschlauches (30) zwischen den Anlageflächen (12, 21) eingeklemmt ist.

2. Ansatzstutzen (1) nach Anspruch 1, wobei das Innenteil (10) eine innere Durchgangsöffnung (11) zum Durchführen des Filterschlauches (30) und eine äußere um seinen Umfang verlaufende Anlagefläche (12) zum Anliegen des über ein erstes Ende (13) des Innenteils (10) nach außen umgeschlagenen Abschnitts (32) des Filterschlauches (30) aufweist.

3. Ansatzstutzen (1) nach Anspruch 1 oder 2, wobei das Außenteil (20) eine über einen Übergangsabschnitt (23) mit der Hülse (24) verbundene Innenhülse (22) aufweist, welche innerhalb der Hülse (24) angeordnet, von der Hülse (24) radial beabstandet ist und welche wenigstens teilweise im Bereich der Anlagefläche (12) innerhalb des Innenteils (10) verläuft.

4. Ansatzstutzen (1) nach einem der Ansprüche 1 bis 3, wobei das Innenteil (10) und/oder das Außenteil (20) als zweiteiliges radial gefügtes Bauteil, insbesondere als Kunststoffspritzgussteil ausgeführt sind.

5. Ansatzstutzen (1) nach einem der Ansprüche 1 bis 4, wobei die Anlagefläche (12, 21) wenigstens bereichsweise als geriffelte Oberfläche gestaltet ist.

6. Ansatzstutzen (1) nach einem der Ansprüche 1 bis 5, wobei die Anlagefläche (12, 21) wenigstens bereichsweise als Sägezahnprofil oder Wellenprofil gestaltet ist, dessen erste flachere Zahnflanken (14) in Richtung auf das erste Ende (13) orientiert sind und dessen zweite steilere Flanken (15) davon weg orientiert sind.

7. Ansatzstutzen (1) nach einem der Ansprüche 1 bis 6, wobei eine Rastverbindung (16) zwischen dem Innenteil (10) und dem Außenteil (20) zum Verrasten des auf das Innenteil (10) aufgeschobenen Außenteils (20) vorgesehen ist.

8. Ansatzstutzen (1) nach Anspruch 7, wobei am Innenteil (10) ein Widerhaken (17) angeordnet ist, der in eine Ausnehmung (25) im Außenteil (20) federnd einrastet.

9. Ansatzstutzen (1) nach einem der Ansprüche 1 bis 8, wobei das Innenteil (10) oder das Außenteil (20) mit einer umlaufenden Dichtung (51) zum dichtenden Anschluss an eine Fluidleitung (50) ausgestattet ist.

10. Filterschlauchanbindung (40) mit einem Ansatzstutzen (1) nach einem der Ansprüche 1 bis 9, wobei ein Filterschlauch (30) zumindest teilweise in dem Innenteil (10) verläuft und die Hülse (24) des Außenteils (20) derart auf das Innenteil (10) aufgesteckt ist, dass der Abschnitt (32) des Filterschlauches (30) zwischen den Anlageflächen (12, 21) des Innenteils (10) und des Außenteils (20) eingeklemmt ist.

11. Filterschlauchanbindung (40) nach Anspruch 10, wobei der Filterschlauch (30) durch die innere Durchgangsöffnung (11) des Innenteils (10) verläuft und ein über ein erstes Ende (13) des Innenteils (10) nach außen umgeschlagener Abschnitt (32) des Filterschlauches (30) dicht an der äußeren, um den Umfang des Innenteils (10) verlaufenden Anlagefläche (12) anliegt und das Außenteil (20) mit der Hülse (24), so auf das Innenteil (10) aufgesteckt ist, dass der umgeschlagene Abschnitt (32) des Filterschlauches (30) zwischen der Hülse (24) und der Anlagefläche (12) eingeklemmt ist.

12. Filterschlauchanbindung (40) nach Anspruch 10 oder 11, wobei eine über einen Übergangsabschnitt (23) mit der Hülse (24) verbundene Innenhülse (22) des Außenteils (20), die innerhalb der Hülse (24) angeordnet und von dieser radial beabstandet ist, wenigstens teilweise so im Bereich der Anlagefläche (12) innerhalb des Innenteils (10) verläuft, dass der Filterschlauch (30) durch die Innenhülse (22) nach außen gegen das Innenteil (10) gedrückt wird.
